Europäisches Patentamt

European Patent Office

Office européen des brevets

(11) Publication number: **0 270 637 B1**

# EUROPEAN PATENT SPECIFICATION

(45) Date of publication of patent specification: **21.10.92**

(21) Application number: **87904013.7**

(22) Date of filing: **05.06.87**

(86) International application number:
**PCT/AU87/00162**

(87) International publication number:
**WO 87/07915 (30.12.87 87/29)**

(51) Int. Cl.⁵: **C22B** 3/00, C22B 34/14,
//C01G25/02

(54) MANUFACTURE OF HIGH PURITY ZIRCONIA FROM LOW-SILICA ZIRCONIFEROUS MATERIALS.

(30) Priority: **18.06.86 AU 6464/86**
**02.07.86 AU 6700/86**

(43) Date of publication of application:
**15.06.88 Bulletin 88/24**

(45) Publication of the grant of the patent:
**21.10.92 Bulletin 92/43**

(84) Designated Contracting States:
**AT BE CH DE FR GB IT LI LU NL SE**

(56) References cited:
**AU-A- 5 397 286**     **AU-B- 564 867**
**DE-B- 1 261 121**     **FR-A- 1 087 816**
**FR-A- 1 255 548**     **FR-A-24 694 62**
**US-A- 1 502 422**     **US-A- 1 530 139**
**US-A- 1 618 286**     **US-A- 3 009 777**
**US-A- 3 811 907**     **US-A-16 182 86**

**Derwent Abstract Accession, No.05293 D/04, Class E32 (1,3-5),SU-A-735570 (25th May 1980)**

(73) Proprietor: **COMMONWEALTH SCIENTIFIC AND INDUSTRIAL RESEARCH ORGANISA-TION**
**Limestone Avenue**
**Campbell, Australian Capital Territory 2601(AU)**

(72) Inventor: **SINHA, Hari, Narayan**
**23 Scheele Street**
**Surrey Hills, VIC 3127(AU)**
Inventor: **HOUCHIN, Martin, Richard**
**61 Cumberland Road**
**Pascoe Vale, VIC 3044(AU)**

(74) Representative: **Andrae, Steffen, Dr. et al**
**Balanstrasse 55**
**W-8000 München 90(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

**Description**

This invention relates to a process for obtaining high purity zirconia ($ZrO_2$) from zirconiferous materials, and is particularly concerned with the production of zirconia from dissociated zircon by sulphuric acid leaching.

Demand for high purity zirconia (99.9% $ZrO_2$ or better), is increasing, particularly for use in the production of partially stabilised zirconia (PSZ), ceramics and for various electronic applications. The most abundant and widely distributed zirconium mineral is zircon ($ZrSiO_4$) and many methods have been developed for the production of zirconia and other Zirconium compounds from this mineral. The selection of a satisfactory process is very much dependant, not only upon the purity of the product required, but also on the nature of the waste products of the process and disposal problems which may be associated with them.

In general, the presently used processes involve either chemical or thermal decomposition of zircon to produce a mixture of zirconia and silica (or compounds thereof) followed by chemical treatment of the decomposition products to produce pure zirconia.

Chemical decomposition of zircon can be accomplished by sintering with alkali or alkaline earth oxides. Sodium hydroxide or sodium carbonate are usually used for this purpose and the reaction can be controlled to produce a product consisting of sodium zirconate and sodium silicate. This product is then leached with water to dissolve the sodium silicate and hydrolyse the sodium zirconate to crude hydrous zirconia, which is then further purified. For example, the crude zirconia may be dissolved in hydrochloric acid followed by sulphuric acid and reprecipitated as zirconium sulphate (e.g., $Zr(SO_4)_2.4H_2O$) by adjustment of the sulphate/water ratio of the solution or as hydrated zirconium oxide by precipitation with ammonia.

There is a considerable body of prior art (for example US Patent No. 2,387,046), relating to the use of sulphuric acid to refine impure zircon and treat low silicon zirconia-based ores. The prior art indicates that considerable difficulty may be encountered when the silica content of zirconia-containing ores is greater than 10%, particularly when it is present as $ZrSiO_4$ rather than free silica (see U.S. Patent No. 2,387,046). Consequently, processes have been developed which involve preliminary steps for breaking the $ZrO_2/SiO_2$ bond and reducing the $SiO_2$ level, e.g. by fusion with caustic soda (U.S. 2,387,046, U.S. 3,398,005).

Zircon can also be completely dissociated by heating at temperatures in excess of 1800°C, for example using a plasma arc furnace. When zircon sand is injected into the plasma arc, it melts and dissociates into zirconia and silica. On rapid cooling, solidification occurs with the formation of extremely small zirconia crystallites in an amorphous silica matrix. Dissociation of zircon can also be accomplished by heating in a conventional electric furnace (operating at about 2000°C) or in a so-called "advanced electric reactor" (AER) furnace operating at about 2400°C. Furnaces of this latter type are described in International Patent Publication No. WO 85/04158 and the references cited therein.

The dissociated zircon product, however produced, may then be chemically treated to separate the zirconia from the silica. There are two basic approaches:

(a) Leaching with caustic soda to dissolve the silica and leave the zirconia crystallites as a relatively pure product.

(b) Treating with sulphuric acid to convert the zirconia to zirconium sulphate which can be separated from the unattacked silica. Japanese Patent Publication No. 23975/1969 describes a process for producing high purity zirconia which involves

- dissociation of zircon by heating in an electric furnace (1900-2000°C) followed by rapid quenching
- crushing the dissociated material to 40-150 $\mu$m (100-300 mesh) particles
- treating the particles with concentrated sulphuric acid at 200° - 300° for 4-5 hours then 300° - 400° for 3-4 hours
- leaching the thus-treated material with water to extract the zirconia as zirconium sulphate and subsequent chemical treatment to produce hydrated zirconium oxysulphate which is then pyrolyzed to give zirconia.

The overall yield of the process is 80-90% based on the zirconia content of the starting ore. The need for grinding of the dissociated ore and the long acid-treatment times constitute serious economic disadvantages for this process.

In EP-A1-0 210 236 there is described a process based on the finding that the efficiency of sulphuric acid leaching of dissociated zircon can be greatly enhanced if proper attention is paid to the removal from the system of the water which is produced during leaching, according to the reaction

$$ZrO_2.SiO_2 + 2H_2SO_4 \rightarrow Zr(SO_4)_2 + 2H_2O + SiO_2.$$

In this process, water is continuously removed from the reaction system, thus maintaining constant acid

2

EP 0 270 637 B1

concentration and temperature. As a result, leaching kinetics are considerably improved and satisfactory leaching can be achieved in 2 to 3 hours.

A different process is disclosed in US-A-3 009 777. There a zirconiferous material having a high silica content is roasted together with alkaline reacting compounds of alkali metals and alkaline earth metals, and the formed mass of meta salts of silica and zirconia is digested with diluted sulphuric acid. What is formed is a solution containing zirconium sulphate together with soluble salts of alkali metals and earth alkali metals. The leaching of a mass of said salts cannot be compared with the leaching of a low-silica-containing zirconiferous material as e.g. caustic-leached plasma-dissociated zircon containing approximately 95% by weight $ZrO_2$.

We have now found that the sulphuric acid leaching process can be applied to the efficient and economical treatment of low-silica-containing zirconiferous materials, including low-silica dissociated zircon, particularly caustic-leached dissociated zircon. A particular advantage of the process of the present invention is that it can be operated at significantly lower temperatures than the preferred temperatures of 300°C and higher of the process of Application No. PCT/AU86/00018, with consequent energy savings. In addition, the constraints of operating at very high temperatures with highly concentrated (98%) sulphuric acid are avoided.

According to the present invention, there is provided a process for the production of zirconium sulfate material to be used in the production of high-purity zirconia containing 99,9% zirconia or better from low-silica-containing zirconiferous material obtained from thermal decomposition of zircon and subsequent caustic leaching and containing approximately 95% $ZrO_2$ by weight, comprising the steps of leaching said low-silica-containing zirconiferous material with sulphuric acid and thereafter recovering the resulting zirconium-containing product, **characterized in that** said sulphuric acid is at a temperature in the range of from 175°C to 250°C and that said sulphuric acid is at a concentration which boils at the leaching temperature.

The step of recovery of the high-purity zirconia produced during the leaching can be performed by methods known per se, including methods described in EP-A1-0 210 236.

Preferably, the starting material used in the process of this invention is caustic-leached, plasma-dissociated zircon containing, for example, approximately 95% $ZrO_2$ by weight. Preferably also, the process of the present invention is carried out at a temperature in the range of from 200°C to 250°C, using sulphuric acid at a corresponding concentration of from 80% to 88% by weight.

In a first embodiment, the process of the present invention may be performed by leaching the low-silica-containing zirconiferous starting material with sulphuric acid at a temperature within the range of 175°C to 250°C, initially commencing with concentrated (98%) sulphuric acid. Water produced as the leaching proceeds dilutes the sulphuric acid until the concentration of the acid is such that it boils at the leaching temperature (for example until the concentration is 88% at a leaching temperature of 250°C).

In an alternative, and preferred, embodiment, the leaching process is initiated and continued using sulphuric acid having a concentration such that it boils at the process temperature.

The process of the present invention is illustrated by the following non-limiting Examples:

EXAMPLE 1

67g samples of caustic-leached, plasma-dissociated zircon (95% $ZrO_2$) were digested with the equivalent of 330g of 98% sulphuric acid at varying concentrations and at varying temperatures (as shown in Table 1) in a 500 $cm^3$ glass reactor fitted with a glass stirrer rotating continuously at 600 rev/min, a thermo-pocket containing a thermometer (or pyrometer) and an air-cooled reflux condenser. The reactor was heated by a heating mantle. The air-cooled condenser returned the refluxing sulphuric acid to the reactor, whilst allowing water produced during the reaction to escape . In this way, the refluxing sulphuric acid solution was maintained at the desired concentration, and the desired reaction temperature was maintained during the course of the reaction.

The results for the series of leaching tests are given in Table 1. They clearly show that significant leaching rates can be obtained from the low-silica-containing starting material when the leaching is carried out in accordance with the present invention.

3

TABLE 1

| Leaching of Caustic-leached, plasma-dissociated zircon (95% $ZrO_2$). | | | |
|---|---|---|---|
| Leaching Conditions | | | |
| Temp. | Conc.of $H_2SO_4$ (by wt.) | Time | % of $ZrO_2$ leached (based on 95% $ZrO_2$) |
| 250°C | 88% | 1 hr | 95% |
| 225°C | 85% | 2.5hr | 94% |
| 200°C | 80% | 4 hr | 85% |
| 175°C | 73% | 6 hr | 35% |
| 150°C | 65% | 4 hr | 3% |

EXAMPLE 2

To demonstrate the effect of initially leaching with 98% $H_2SO_4$ at 250°C, compared with leaching with 88% $H_2SO_4$ at 250°C, a 67g sample of caustic-leached, plasma-dissociated zircon (95% $ZrO_2$) was digested with 330g of 98% sulphuric acid at a constant temperature of 250°C for 2 hrs as described in Example 1. The percentage of $ZrO_2$ leached was 86% (compared with 95% $ZrO_2$ leached after 1 hr using 88% $H_2SO_4$ - see Table 1, Example 1).

EXAMPLE 3

To demonstrate the effect of using plasma-dissociated zircon (67% $ZrO_2$), compared with caustic-leached, plasma-dissociated zircon (95% $ZrO_2$) for lower temperature, lower $H_2SO_4$ concentration leaches, a 100g sample of plasma-dissociated zircon (67% $ZrO_2$) was digested with 368g of 88% w/w $H_2SO_4$ (the equivalent of 330g of 98% w/w $H_2SO_4$) at a constant temperature of 250°C for 4 hrs as described in Example 1. The percentage of $ZrO_2$ leached was 4% (compared with 95% $ZrO_2$ leached after 1 hr using caustic-leached, plasma-dissociated zircon (95% $ZrO_2$) - see Table 1, Example 1).

EXAMPLE 4

To demonstrate that a lower acid to zirconia ratio can be used without reducing the leach efficiency, a 150g sample of caustic-leached, plasma-dissociated zircon (95% $ZrO_2$) was digested with 445g of 85% $H_2SO_4$ (385g of 98% $H_2SO_4$ plus 60g of $H_2O$) at 225°C for 2.5 hours as described in Example 1. The percentage of $ZrO_2$ leached was 94%.

**Claims**

1. A process for the production of a zirconium sulfate material to be used in the production of high-purity zirconia containing 99,9% zirconia or better from a low-silica-containing zirconiferous material obtained from the thermal decomposition of zircon and subsequent caustic leaching and containing approximately 95% $ZrO_2$ by weight, said process comprising the steps of leaching said low-silica-containing zirconiferous material with sulphuric acid and thereafter recovering the resulting zirconium-containing product, **characterized in that** said sulphuric acid is at a temperature in the range of from 175°C to 250°C and that said sulphuric acid is at a concentration which boils at the leaching temperature.

2. A process as claimed in claim 1, characterized in that said low-silica-containing zirconiferous material is caustic-leached, plasma-dissociated zircon.

3. A process as claimed in Claim 1 or 2, characterized in that the leaching process is initiated and continued using sulphuric acid having a concentration such that it boils at the process temperature.

4. A process as claimed in Claim 3, characterized in that leaching is carried out at a temperature in the range of from 200°C to 250°C, using sulphuric acid at a concentration of from 80% to 88% by weight.

5. A process as claimed in claim 3, characterized in that the low-silica-containing zirconiferous starting material is leached with sulphuric acid at a temperature within the range of 175°C to 250°C, initally commencing with concentrated (98%) sulphuric acid, so that water produced as the leaching proceeds dilutes the sulphuric acid until the concentration of the acid is such that it boils at the leaching temperature.

6.  Use of the zirconium sulfate material obtained in a process in accordance with any of claims 1 to 5 for the production of high purity zirconia containing 99,9% zirconia or better.

**Patentansprüche**

1.  Verfahren zur Herstellung eines Zirconiumsulfatmaterials zur Verwendung bei der Herstellung von hochreinem Zirconiumoxid mit einem Gehalt von 99,9 % Zirconium oder mehr aus einem Zirkonmaterial mit einem niedrigen Siliciumoxidgehalt, das durch thermische Zersetzung von Zirkon und anschließendes basisches Auslaugen erhalten wurde und das etwa 95 Gew.% $ZrO_2$ enthält, wobei das Verfahren die Stufen des Auslaugens des genannten Zirkonmaterials mit niedrigem Siliciumoxidgehalt mit Schwefelsäure und die anschließende Gewinnung des gebildeten zirconiumhaltigen Produkts umfaßt, dadurch gekennzeichnet, daß sich die Schwefelsäure auf einer Temperatur im Bereich von 150 bis 250°C befindet und daß die genannte Schwefelsäure eine solche Konzentration aufweist, daß sie bei der Auslaugtemperatur siedet.

2.  Verfahren nach Anspruch 1, dadurch gekennzeichnet, daß das genannte Zirkonmaterial mit niedrigem Siliciumoxidgehalt ein basisch ausgelaugter, plasmadissoziierter Zirkon ist.

3.  Verfahren nach Anspruch 1 oder 2, dadurch gekennzeichnet, daß das Auslaugverfahren unter Verwendung einer Schwefelsäure begonnen und fortgesetzt wird, die eine solche Konzentration aufweist, daß sie bei der Verfahrenstemperatur siedet.

4.  Verfahren nach Anspruch 3, dadurch gekennzeichnet, daß das Auslaugen bei einer Temperatur im Bereich von 200 bis 250°C durchgeführt wird, wobei Schwefelsäure mit einer Konzentration von 80 bis 88 Gew.% verwendet wird.

5.  Verfahren nach Anspruch 3, dadurch gekennzeichnet, daß das Zirkon-Ausgangsmaterial mit dem niedrigen Siliciumoxidgehalt mit Schwefelsäure bei einer Temperatur im Bereich von 175°C bis 250°C ausgelaugt wird, wobei man anfangs mit konzentrierter (98 %iger) Schwefelsäure beginnt, so daß das Wasser, das während des fortschreitenden Auslaugens erzeugt wird, die Schwefelsäure verdünnt, bis die Konzentration der Säure eine solche ist, daß sie bei der Auslaugtemperatur siedet.

6.  Verwendung des Zirconiumsulfatmaterials, das bei einem Verfahren gemäß irgendeinem der Ansprüche 1 bis 5 erhalten wird, zur Herstellung von Zirconiumoxid hoher Reinheit, das 99,9 % Zirconiumoxid oder mehr enthält.

**Revendications**

1.  Procédé de production d'un sulfate de zirconium destiné à être utilisé dans la production de zircone de haute pureté, contenant une quantité égale ou supérieure à 99,9 % de zircone, à partir d'une matière zirconifère à basse teneur en silice obtenue par décomposition thermique du zircon, puis lessivage avec une base caustique, et contenant approximativement 95 % de $ZrO_2$ en poids, ledit procédé comprenant les étapes consistant à lessiver avec de l'acide sulfurique ladite matière zirconifère à basse teneur en silice, puis à séparer le produit résultant contenant du zirconium, caractérisé en ce que ledit acide sulfurique est à une température comprise dans l'intervalle de 175°C à 250°C et est à une concentration telle que cet acide sulfurique bout à la température de lessivage.

2.  Procédé suivant la revendication 1, caractérisé en ce que la matière zirconifère à basse teneur en silice consiste en zircon lessivé avec une base caustique et dissociée par plasma.

3.  Procédé suivant la revendication 1 ou 2, caractérisé en ce que le procédé de lessivage est commencé et poursuivi au moyen d'acide sulfurique ayant une concentration telle que cet acide sulfurique bout à la température de traitement.

**4.** Procédé suivant la revendication 3, caractérisé en ce que le lessivage est effectué à une température comprise dans l'intervalle de 200°C à 250°C, au moyen d'acide sulfurique à une concentration de 80 % à 88 % en poids.

**5.** Procédé suivant la revendication 3, caractérisé en ce que la matière zirconifère de départ à basse teneur en silice est lessivée avec de l'acide sulfurique à une température comprise dans l'intervalle de 175°C à 250°C, initialement avec de l'acide sulfurique concentré (98 %), de telle sorte que l'eau produite lorsque le lessivage s'effectue dilue l'acide sulfurique jusqu'à ce que la concentration de l'acide soit telle que cet acide bouille à la température de lessivage.

**6.** Utilisation du sulfate de zirconium obtenu dans un procédé suivant l'une quelconque des revendications 1 à 5 pour la production de zircone de haute pureté, contenant une quantité égale ou supérieure à 99,9 % de zircone.